(19) Europäisches Patentamt
European Patent Office
Office européen des brevets

(11) **EP 2 726 534 B1**

(12) **EUROPÄISCHE PATENTSCHRIFT**

(45) Veröffentlichungstag und Bekanntmachung des Hinweises auf die Patenterteilung:
**04.03.2015   Patentblatt 2015/10**

(51) Int Cl.:
***C08G 65/00*** (2006.01)   ***C08G 65/26*** (2006.01)

(21) Anmeldenummer: **12729635.8**

(22) Anmeldetag: **26.06.2012**

(86) Internationale Anmeldenummer:
**PCT/EP2012/062363**

(87) Internationale Veröffentlichungsnummer:
**WO 2013/000915 (03.01.2013 Gazette 2013/01)**

(54) **VERFAHREN ZUR HERSTELLUNG VON HOCHMOLEKULAREN POLYETHERPOLYOLEN**

METHOD FOR MANUFACTURING HIGH-MOLECULAR POLYETHER POLYOLS

PROCÉDÉ DESTINÉ À LA FABRICATION DE POLYOLS DE POLYÉTHER HAUTEMENT MOLÉCULAIRES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.06.2011   EP 11172174**

(43) Veröffentlichungstag der Anmeldung:
**07.05.2014   Patentblatt 2014/19**

(73) Patentinhaber: **Bayer Intellectual Property GmbH**
**40789 Monheim (DE)**

(72) Erfinder:
• **LORENZ, Klaus**
**41539 Dormagen (DE)**
• **HOFMANN, Jörg**
**47800 Krefeld (DE)**

• **ZWICK, Horst**
**41539 Dormagen (DE)**
• **STEINLEIN, Christian**
**40882 Ratingen (DE)**
• **BROWNE, Edward**
**50672 Köln (DE)**

(74) Vertreter: **BIP Patents**
**c/o Bayer Intellectual Property GmbH**
**Creative Campus Monheim**
**Alfred-Nobel-Straße 10**
**40789 Monheim (DE)**

(56) Entgegenhaltungen:
**WO-A1-01/38420     WO-A1-99/14258**
**US-A- 5 714 639**

EP 2 726 534 B1

**Beschreibung**

Gegenstand der vorliegenden Erfindung ist ein Verfahren zur Herstellung von Polyetherpolyolen mit Äquivalentmolmassen von 8000 bis 20000 g/mol, bevorzugt von 9000 bis 20000 g/mol, besonders bevorzugt von 10000 bis 16000 g/mol.

Für die Herstellung von Polyurethanen geeignete Polyetherpolyole können über verschiedene Herstellverfahren erhalten werden. Von großtechnischer Bedeutung ist zum Einen die basisch katalysierte Anlagerung von Alkylenoxiden an H-funktionelle Starterverbindungen, zum anderen die Verwendung von Doppelmetallcyanidverbindungen als Katalysatoren ("DMC-Katalysatoren") für die Anlagerung von Alkylenoxiden an H-funktionelle Starterverbindungen. Die durch (Lewis-)Säuren katalysierte Anlagerung von Alkylenoxiden an geeignete Starterverbindungen ist von untergeordneter Bedeutung.

Unter Alkalimetallhydroxidkatalyse nehmen mit steigender Molmasse des Polymerisates unerwünschte Nebenreaktionen deutlich zu. Insbesondere ist hier die Isomerisierung von Propylenoxid zu Allylalkohol zu nennen, die bei hohen Äquivalentmolmassen (bzw. niedrigen OH-Zahlen) zu einem hohen Anteil monofunktioneller Polyetherspezies im Reaktionsgemisch und damit zu einer signifikanten Absenkung der Funktionalität führt. Die monofunktionellen Polyethermoleküle wirken sich daher nachteilig auf das Durchhärteverhalten und das physikalische Eigenschaftsprofil von Polyurethansystemen bzw. anderen aus diesen Polyethern herstellbaren Werkstoffen, wie beispielsweise silanbasierten Dichtstoffen, aus.

Durch den Einsatz der DMC-Katalysatoren ist es möglich geworden, die Addition von Alkylenoxiden, insbesondere Propylenoxid, an H-funktionelle Starterverbindungen bis zu sehr niedrigen OH-Zahlen, d. h. hohen Äquivalentmolmassen, voranzutreiben, ohne dass die oben erwähnte Isomerisierung von Propylenoxid zu Allylalkohol in nennenswertem Maße eintritt. Hochaktive DMC-Katalysatoren, die z.B. in US-A 5470813, EP-A 700949, EP-A 743093, EP-A 761708, WO-A 97/40086, WO-A 98/16310 und WO-A 00/47649 beschrieben sind, besitzen zudem eine außerordentlich große Aktivität und ermöglichen die Polyetherpolyolherstellung bei sehr geringen Katalysatorkonzentrationen (100 ppm oder weniger), so dass eine Abtrennung des Katalysators aus dem fertigen Produkt nicht mehr erforderlich ist. Ein typisches Beispiel sind die in EP-A 700949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert.-Butanol) noch einen Polyether mit einem zahlenmittleren Molekulargewicht größer als 500 g/mol enthalten.

Unter der Äquivalentmolmasse aktive Wasserstoffatome enthaltender Materialien ist die durch die Zahl der aktiven Wasserstoffatome geteilte Gesamtmasse des aktive Wasserstoffatome enthaltenden Materials zu verstehen. Im Falle von hydroxygruppenhaltigen Materialien (wie beispielsweise Polyetherpolyolen) steht sie in folgender Beziehung zur OH-Zahl (Hydroxyl-Zahl):

$$\text{Äquivalentmolmasse} = 56100 / (\text{OH-Zahl [mg KOH/g]}) \qquad (I)$$

Die Ermittlung der Äquivalentmolmasse des Polyetherpolyols erfolgt also gemäß Formel (I), wobei die die Hydroxylzahl des Polyetherpolyols nach DIN 53240 bestimmt wird.

Die DMC-katalysierte Herstellung von Alkylenoxidadditionsprodukten mit hohen Äquivalentmolmassen und deren Verwendung zur Herstellung von polyurethan- bzw. polyharnstoffbasierten Werkstoffen sind dem Fachmann bekannt. Beispielsweise werden in DE-A 4117679 und US-A 5096993 die Verwendung von Polyhydroxy- bzw. Polyaminverbindungen mit Molmassen bis zu 30000 Da zur Herstellung von weichen Polyurethan- bzw. Polyharnstoffelastomeren nach dem Reaktionsspritzgussverfahren ("RIM"-Technologie) offenbart. WO-A 9104997 offenbart Polyethertriole mit Molmassen bis zu 30000 Da als Polyetherkomponente von isocyanatterminierten Prepolymeren, die in hochwertigen Polyurethandichtstoffsystemen eingesetzt werden. EP-A 1316573 offenbart ein Verfahren zum Erhalt von schnell entformbaren Weichschaumstoffkörpern mit guten Dauergebrauchseigenschaften, bei deren Herstellung als Polyolkomponente über DMC-Katalyse hergestellte Polyetherpolyole mit Äquivalentmolmassen von bevorzugt 5000 bis 11000 Da zum Einsatz kommen. In EP-A 0425694 werden isocyanatterminierte Polyetherprepolymere offenbart, deren Polyetherkomponente Äquivalentmolmassen von bis zu 15000 Da aufweist. Solche Polyetherpolyole werden über DMC-Katalyse erhalten. Über DMC-Katalyse hergestellte Polyether mit Äquivalentmolmassen bis zu 15000 Da werden in EP-A 0732561 als Ausgangsverbindungen zur Herstellung feuchtigkeitshärtender Dichtstoffsysteme auf Basis silangruppenhaltiger Polymere verwendet.

Bei der DMC-katalysierten Herstellung von Polyetherpolyolen mit sehr hohen Äquivalentmolmassen (8000 Da oder höher) stellt sich die Erzielung enger Molmassenverteilungen und, damit einhergehend, handhabbarer Viskositäten mit wachsendem Äquivalentgewicht als zunehmend problematisch dar. Die Verfahren des Standes der Technik bieten für dieses Problem keine Lösungen an.

Die Aufgabe der vorliegenden Erfindung bestand daher darin, ein auf die Erzielung möglichst niedriger Viskositäten und enger Molmassenverteilungen optimiertes Herstellverfahren für Polyetherpolyole mit Äquivalentmolmassen von 8000 bis 20000 g/mol, bevorzugt von 9000 bis 20000 g/mol, besonders bevorzugt von 10000 bis 16000 g/mol bereitzustellen.

Überraschenderweise wurde gefunden, dass ein Verfahren zur Herstellung von Polyetherpolyolen mit Äquivalentmolmassen von 8000 bis 20000 g/mol, bevorzugt von 9000 bis 20000 g/mol, besonders bevorzugt von 10000 bis 16000 g/mol aus einer oder mehreren H-funktionellen Starterverbindungen und einem oder mehreren Alkylenoxiden in Gegenwart eines Doppelmetallcyanid-Katalysators, dadurch gekennzeichnet, dass die Alkylenoxide über einen Zeitraum von 15 bis 23 h in den Reaktor dosiert werden, die oben genannte erfindungsgemäße Aufgabe löst.

H-funktionelle Starterverbindungen sind solche Verbindungen, die mindestens ein Zerewitinoffaktives Wasserstoffatom, manchmal auch nur als "aktiver Wasserstoff" bezeichnet, enthalten. Ein an C, N, O, oder S gebundener Wasserstoff wird als Zerewitinoff-aktiver Wasserstoff bezeichnet, wenn er nach einem von Zerewitinoff aufgefundenen Verfahren durch Umsetzung mit Methylmagnesiumjodid Methan liefert. Typische Beispiele für Verbindungen mit Zerewitinoffaktivem Wasserstoff sind Verbindungen, die Carboxyl-, Hydroxyl- oder Thiol-Gruppen als funktionelle Gruppen enthalten. Unter der Funktionalität wird die Anzahl an Zerewitinoff-aktiven Wasserstoffatomen pro Molekül der H-funktionellen Starterverbindungen verstanden. Geeignete H-funktionelle Starterverbindungen weisen meist Funktionalitäten von 1 bis 35, bevorzugt von 1 bis 8, besonders bevorzugt 2 bis 3 auf. Ihre Molmassen betragen von 18 g/mol bis 1200 g/mol. Wird eine Mischung an H-funktionellen Starterverbindungen eingesetzt, ist die Funktionalität dieser Mischung die zahlengemittelte durchschnittliche Funktionalität der H-funktionellen Starterverbindungen. Typische Beispiele für geeignete Starterverbindungen sind Methanol, Ethanol, 1-Propanol, 2-Propanol und höhere aliphatische Monole, insbesondere Fettalkohole, Phenol, alkylsubstituierte Phenole, Propylenglykol, Ethylenglykol, Diethylenglykol, Dipropylenglykol, 1,2-Butandiol, 1,3-Butandiol, 1,4-Butandiol, Hexandiol, Pentandiol, 3-Methyl-1,5-pentandiol, 1,12-Dodecandiol, Glycerin, Trimethylolpropan, Pentaerythrit, Sorbit, Saccharose, Hydrochinon, Brenzcatechin, Resorcin, Bisphenol F, Bisphenol A, 1,3,5-Trihydroxybenzol, sowie methylolgruppenhaltige Kondensate aus Formaldehyd und Phenol oder Harnstoff. Es können auch hochfunktionelle Starterverbindungen auf Basis von hydrierten Stärkehydrolyseprodukten eingesetzt werden. Solche sind beispielsweise in EP-A 1525244 beschrieben. Außerdem können als Starterverbindungen auch Ringöffnungsprodukte aus cyclischen Carbonsäureanhydriden und Polyolen eingesetzt werden. Beispiele sind Ringöffnungsprodukte aus Phthalsäureanhydrid, Bernsteinsäureanhydrid, Maleinsäureanhydrid einerseits und Ethylenglykol, Diethylenglykol, 1,2-Butandiol, 1,3-Butandiol, 1,4-Butandiol, Hexandiol, Pentandiol, 3-Methyl-1,5-pentandiol, 1,12-Dodecandiol, Glycerin, Trimethylolpropan, Pentaerythrit oder Sorbit andererseits. Daneben ist es auch möglich, ein- oder mehrfunktionelle Carbonsäuren direkt als Starterverbindungen einzusetzen.

Im erfindungsgemäßen Verfahren können auch vorgefertigte Alkylenoxidadditionsprodukte der erwähnten H-funktionellen Starterverbindungen, also Polyetherpolyole vorzugsweise mit OH-Zahlen von 16 bis 1000 mg KOH/g, besonders bevorzugt 40 bis 1000 mg KOH/g, als ausschließliche Starter für das erfindungsgemäße Verfahren eingesetzt werden oder den oben erwähnten Startern zugesetzt werden. Diese als (Co-)Starter einsetzbaren Alkylenoxidadditionsprodukte können ihrerseits über DMC- oder Basenkatalyse hergestellt werden. Auch ist es möglich, im erfindungsgemäßen Prozess Polyesterpolyole vorzugsweise mit OH-Zahlen im Bereich von 20 bis 800 mg KOH/g als (Co-)Starter mit dem Ziel der Polyetheresterherstellung einzusetzen. Hierfür geeignete Polyesterpolyole können beispielsweise aus organischen Dicarbonsäuren mit 2 bis 12 Kohlenstoffatomen und mehrwertigen Alkoholen, vorzugsweise Diolen, mit 2 bis 12 Kohlenstoffatomen, vorzugsweise 2 bis 6 Kohlenstoffatomen nach bekannten Verfahren hergestellt werden.

Des Weiteren können als H-funktionelle Startersubstanzen Polycarbonatpolyole, Polyestercarbonatpolyole oder Polyethercarbonatpolyole, bevorzugt Polycarbonatdiole, Polyestercarbonatdiole oder Polyethercarbonatdiole vorzugsweise jeweils mit OH-Zahlen im Bereich von 20 bis 800 mg KOH/g, als (Co-)Starter verwendet werden. Diese werden beispielsweise durch Umsetzung von Phosgen, Dimethylcarbonat, Diethylcarbonat oder Diphenylcarbonat mit di- oder höherfunktionellen Alkoholen oder Polyesterpolyolen oder Polyetherpolyolen hergestellt.

Im erfindungsgemäßen Verfahren dienen bevorzugt H-funktionelle Starterverbindungen mit Hydroxygruppen wie beispielsweise Methanol, Ethanol, 1-Propanol, 2-Propanol und höhere aliphatische Monole, insbesondere Fettalkohole, Phenol, alkylsubstituierte Phenole, Propylenglykol, Ethylenglykol, Diethylenglykol, Dipropylenglykol, 1,2-Butandiol, 1,3-Butandiol, 1,4-Butandiol, Hexandiol, Pentandiol, 3-Methyl-1,5-pentandiol, 1,12-Dodecandiol, Glycerin, Trimethylolpropan, Pentaerythrit, Sorbit, Saccharose, Hydrochinon, Brenzcatechin, Resorcin, Bisphenol F, Bisphenol A, 1,3,5-Trihydroxybenzol, methylolgruppenhaltige Kondensate aus Formaldehyd und Phenol und hydrierte Stärkehydrolyseprodukte sowie die Alkylenoxidadditionsprodukte dieser Starterverbindungen als Träger der aktiven Wasserstoffe. Es können auch Gemische verschiedener H-funktioneller Starterverbindungen eingesetzt werden. Die Funktionalität der H-funktionellen Starterverbindungen beträgt besonders bevorzugt 2 bis 3.

Für das erfindungsgemäße Verfahren geeignete DMC-Katalysatoren sind im Prinzip aus dem Stand der Technik bekannt (siehe z.B. US-A 3 404 109, US-A 3829505, US-A 3941849 und US-A 5158922). DMC-Katalysatoren, die z.B. in US-A 5470813, EP-A 700949, EP-A 743093, EP-A 761708, WO 97/40086, WO 98/16310 und WO 00/47649 beschrieben sind, besitzen eine sehr hohe Aktivität in der Polymerisation von Alkylenoxiden und ermöglichen die Herstellung von Polyetherpolyolen unter optimalen Bedingungen bei sehr geringen Katalysatorkonzentrationen (100 ppm oder weniger), so dass eine Abtrennung des Katalysators aus dem fertigen Produkt im Allgemeinen nicht mehr erforderlich ist. Ein typisches Beispiel sind die in EP-A 700949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert.-Butanol) noch einen Polyether mit einem zahlenmittlerem Molekulargewicht größer als 500 g/mol enthalten. Es ist auch möglich, die in EP Anmeldenummer 10163170.3 offenbarten alkalischen DMC-Katalysatoren einzusetzen.

Zur Herstellung der Doppelmetallcyanid-Verbindungen geeignete cyanidfreie Metallsalze besitzen bevorzugt die allgemeine Formel (II),

$$M(X)_n \qquad (II)$$

wobei

M ausgewählt ist aus den Metallkationen $Zn^{2+}$, $Fe^{2+}$, $Ni^{2+}$, $Mn^{2+}$, $Co^{2+}$, $Sr^{2+}$, $Sn^{2+}$, $Pb^{2+}$ und, $Cu^{2+}$, bevorzugt ist M $Zn^{2+}$, $Fe^{2+}$, $Co^{2+}$ oder $Ni^{2+}$,
X sind ein oder mehrere (d.h.verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
n ist 1, wenn X = Sulfat, Carbonat oder Oxalat ist und
n ist 2, wenn X = Halogenid, Hydroxid, Cyanat, Thiocyanat, Isocyanat, Isothiocyanat oder Nitrat ist,

oder geeignete cyanidfreie Metallsalze besitzen die allgemeine Formel (III),

$$M_r(X)_3 \qquad (III)$$

wobei

M ausgewählt ist aus den Metallkationen $Fe^{3+}$, $Al^{3+}$ und $Cr^{3+}$,
X sind ein oder mehrere (d.h.verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
r ist 2, wenn X = Sulfat, Carbonat oder Oxalate ist und
r ist 1, wenn X = Halogenid, Hydroxid, Cyanat, Thiocyanat, Isocyanat, Isothiocyanat, Carboxylat oder Nitrat ist,

oder geeignete cyanidfreie Metallsalze besitzen die allgemeine Formel (IV),

$$M(X)_s \qquad (IV)$$

wobei

M ausgewählt ist aus den Metallkationen $Mo^{4+}$, $V^{4+}$ und $W^{4+}$
X sind ein oder mehrere (d.h.verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
s ist 2, wenn X = Sulfat, Carbonat oder Oxalat ist und
s ist 4, wenn X = Halogenid, Hydroxid, Cyanat, Thiocyanat, Isocyanat, Isothiocyanat, Carboxylat oder Nitrat ist,

oder geeignete cyanidfreie Metallsalze besitzen die allgemeine Formel (V),

$$M(X)_t \qquad (V)$$

wobei
M ausgewählt ist aus den Metallkationen $Mo^{6+}$ und $W^{6+}$
X sind ein oder mehrere (d.h.verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
t ist 3, wenn X = Sulfat, Carbonat oder Oxalat ist und
t ist 6, wenn X = Halogenid, Hydroxid, Cyanat, Thiocyanat, Isocyanat, Isothiocyanat, Carboxylat oder Nitrat ist,

Beispiele geeigneter cyanidfreier Metallsalze sind Zinkchlorid, Zinkbromid, Zinkjodid, Zinkacetat, Zinkacetylacetonat, Zinkbenzoat, Zinknitrat, Eisen(II)sulfat, Eisen(II)bromid, Eisen(II)chlorid, Cobalt(II)chlorid, Cobalt(II)thiocyanat, Nickel(II)chlorid und Nickel(II)nitrat. Es können auch Mischungen verschiedener Metallsalze eingesetzt werden.

Zur Herstellung der Doppelmetallcyanid-Verbindungen geeignete Metallcyanidsalze besitzen bevorzugt die allgemeine Formel (VI)

$$(Y)_a M'(CN)_b (A)_c \qquad (VI)$$

wobei

M' ausgewählt ist aus einem oder mehreren Metallkationen der Gruppe bestehend aus Fe(II), Fe(II), Co(II), Co(III), Cr(II), Cr(III), Mn(II), Mn(III), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) und Ni(II),

Y ausgewählt ist aus einem oder mehreren Metallkationen der Gruppe bestehend aus Alkalimetall (d.h. $Li^+$, $Na^+$, $K^+$, $Rb^+$, $Cs^+$) und Erdalkalimetall (d.h. $Be^{2+}$, $Ca^{2+}$, $Mg^{2+}$, $Sr^{2+}$, $Ba^{2+}$),

A ausgewählt ist aus einem oder mehreren Anionen der Gruppe bestehend aus Halogeniden (d..h. Fluorid, Chlorid, Bromid, Iodid), Hydroxid, Sulfat, Carbonat, Cyanat, Thiocyanat, Isocyanat, Isothiocyanat, Carboxylat, Oxalat oder Nitrat und

a, b und c sind ganzzahlige Zahlen, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.

Beispiele geeigneter Metallcyanidsalze sind Kaliumhexacyanocobaltat(III), Kaliumhexacyanoferrat(II), Kaliumhexacyanoferrat(III), Calciumhexacyanocobaltat(III) und Lithiumhexacyanocobaltat(III).

Bevorzugte Doppelmetallcyanid-Verbindungen, die in den erfindungsgemäßen DMC-Katalysatoren enthalten sind, sind Verbindungen der allgemeinen Formel (VII)

$$M_x [M'_{x'} (CN)_y]_z \qquad (VII),$$

worin M wie in Formel (II) bis (V) und

M' wie in Formel (VI) definiert ist, und

x, x', y und z sind ganzzahlig und so gewählt, dass die Elektronenneutralität der Doppelmetallcyanidverbindung gegeben ist.

Vorzugsweise ist

x = 3, x'= 1, y = 6 und z = 2,

M = Zn(II), Fe(II), Co(II) oder Ni(II) und

M' = Co(III), Fe(III), Cr(III) oder Ir(III).

Beispiele geeigneter Doppelmetallcyanidverbindungen sind Zinkhexacyanocobaltat(III), Zinkhexacyanoiridat(III), Zinkhexacyanoferrat(III) und Cobalt(II)hexacyanocobaltat(III). Weitere Beispiele geeigneter Doppelmetallcyanid-Verbindungen sind z.B. US-A 5158922 (Spalte 8, Zeilen 29 - 66) zu entnehmen. Besonders bevorzugt verwendet wird Zinkhexacyanocobaltat(III).

Die bei der Herstellung der DMC-Katalysatoren zugesetzten organischen Komplexliganden sind beispielsweise in US-A 5158922 (siehe insbesondere Spalte 6, Zeilen 9 bis 65), US-A 3404109, US-A 3829505, US-A 3941849, EP-A 700949, EP-A 761708, JP-A 4145123, US-A 5470813, EP-A 743 093 und WO-A 97/40086) offenbart. Beispielsweise werden als organische Komplexliganden wasserlösliche, organische Verbindungen mit Heteroatomen, wie Sauerstoff, Stickstoff, Phosphor oder Schwefel, die mit der Doppelmetallcyanid-Verbindung Komplexe bilden können, eingesetzt. Bevorzugte organische Komplexliganden sind Alkohole, Aldehyde, Ketone, Ether, Ester, Amide, Harnstoffe, Nitrile, Sulfide und deren Mischungen. Besonders bevorzugte organische Komplexliganden sind aliphatische Ether (wie Dimethoxyethan), wasserlösliche aliphatische Alkohole (wie Ethanol, Isopropanol, n-Butanol, iso-Butanol, sek.-Butanol, tert-Butanol, 2-Methyl-3-buten-2-ol und 2-Methyl-3-butin-2-ol), Verbindungen, die sowohl aliphatische oder cycloaliphatische Ethergruppen wie auch aliphatische Hydroxylgruppen enthalten (wie z.B. Ethylenglykol-mono-tert.-butylether, Diethylenglykol-mono-tert.-butylether, Tripropylenglykolmono-methylether und 3-Methyl-3-oxetan-methanol). Höchst bevorzugte organische Komplexliganden sind ausgewählt aus einer oder mehrerer Verbindungen der Gruppe bestehend aus Dimethoxyethan, tert-Butanol, 2-Methyl-3-buten-2-ol, 2-Methyl-3-butin-2-ol, Ethylenglykol-mono-tert.-butylether und 3-Methyl-3-oxetan-methanol.

Optional werden bei der Herstellung der erfindungsgemäßen DMC-Katalysatoren eine oder mehrere komplexbildende Komponente(n) aus den Verbindungsklassen der Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose und Polyacetale, oder der Glycidylether, Glycoside, Carbonsäureester mehrwertiger Alkohole, Gallensäuren oder deren Salze, Ester oder Amide, Cyclodextrine, Phosphorverbindungen, $\alpha,\beta$-ungesättigten Carbonsäureester oder ionische oberflächen- bzw. grenzflächenaktiven Verbindungen eingesetzt.

Bevorzugt werden bei der Herstellung der erfindungsgemäßen DMC-Katalysatoren im ersten Schritt die wässrigen Lösungen des Metallsalzes (z.B. Zinkchlorid), eingesetzt im stöchiometrischen Überschuss (mindestens 50 Mol-%) bezogen auf Metallcyanidsalz, (also mindestens ein molares Verhältnis von cyanidfreiem Metallsalz zu Metallcyanidsalz von 2,25 zu 1,00) und des Metallcyanidsalzes (z.B. Kaliumhexacyanocobaltat) in Gegenwart des organischen Komplexliganden (z.B. tert.-Butanol) umgesetzt, so dass sich eine Suspension bildet, die die Doppelmetallcyanid-Verbindung (z.B. Zinkhexacyanocobaltat), Wasser, überschüssiges cyanidfreies Metallsalz, und den organischen Komplexliganden enthält. Der organische Komplexligand kann dabei in der wässrigen Lösung des cyanidfreien Metallsalzes und/oder des Metallcyanidsalzes vorhanden sein, oder er wird der nach Ausfällung der Doppelmetallcyanid-Verbindung erhaltenen Suspension unmittelbar zugegeben. Es hat sich als vorteilhaft erwiesen, die wässrigen Lösungen des cyanidfreien Metallsalzes und des Metallcyanidsalzes und den organischen Komplexliganden unter starkem Rühren zu vermischen. Optional wird die im ersten Schritt gebildete Suspension anschließend mit einer weiteren komplexbildenden Komponente behandelt. Die komplexbildende Komponente wird dabei bevorzugt in einer Mischung mit Wasser und organischem Komplexliganden eingesetzt. Ein bevorzugtes Verfahren zur Durchführung des ersten Schrittes (d.h. der Herstellung der Suspension) erfolgt unter Einsatz einer Mischdüse, besonders bevorzugt unter Einsatz eines Strahldispergators wie in WO-A 01/39883 beschrieben.

Im zweiten Schritt erfolgt die Isolierung des Feststoffs (d.h. die Vorstufe des erfindungsgemäßen Katalysators) aus der Suspension durch bekannte Techniken, wie Zentrifugation oder Filtration.

In einer bevorzugten Ausführungsvariante zur Herstellung des Katalysators wird der isolierte Feststoff anschließend in einem dritten Verfahrensschritt mit einer wässrigen Lösung des organischen Komplexliganden gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem erfindungsgemäßen Katalysator entfernt werden. Bevorzugt liegt die Menge des organischen Komplexliganden in der wässrigen Waschlösung zwischen 40 und 80 Gew.-%, bezogen auf die Gesamtlösung.

Optional wird im dritten Schritt der wässrigen Waschlösung weitere komplexbildende Komponente, bevorzugt im Bereich zwischen 0,5 und 5 Gew.-%, bezogen auf die Gesamtlösung, zugefügt.

Außerdem ist es vorteilhaft, den isolierten Feststoff mehr als einmal zu waschen. Hierzu kann z.B. der erste Waschvorgang wiederholt werden. Bevorzugt ist es aber, für weitere Waschvorgänge nicht wässrige Lösungen zu verwenden, z.B. eine Mischung aus organischem Komplexliganden und weiterer komplexbildender Komponente.

Der isolierte und gegebenenfalls gewaschene Feststoff wird anschließend, gegebenenfalls nach Pulverisierung, bei Temperaturen von im allgemeinen 20 - 100 °C und bei Drücken von im allgemeinen 0,1 mbar bis Normaldruck (1013 mbar) getrocknet.

Ein bevorzugtes Verfahren zur Isolierung der erfindungsgemäßen DMC-Katalysatoren aus der Suspension durch Filtration, Filterkuchenwäsche und Trocknung wird in WO-A 01/80994 beschrieben.

Im erfindungsgemäßen Verfahren wird der DMC-Katalysator in Mengen von 10 bis 1000 ppm, bevorzugt in Mengen von 15 bis 500 ppm, besonders bevorzugt in Mengen von 20 bis 300 ppm und ganz besonders bevorzugt in Mengen von 25 bis 150 ppm, jeweils bezogen auf die Größe des gesamten Reaktionsansatzes, verwendet.

Vorzugsweise verbleibt der DMC-Katalysator im Endprodukt, er kann jedoch auch abgetrennt werden, beispielsweise durch Behandlung mit Adsorbentien. Verfahren zur Abtrennung von DMC-Katalysatoren sind beispielsweise beschrieben in US-A 4987271, DE-A 3132258, EP-A 406440, US-A 5391722, US-A 5099075, US-A 4721818, US-A 4877906 und EP-A 385619.

Für das erfindungsgemäße Verfahren können Alkylenoxide (Epoxide) mit 2 bis 24 Kohlenstoffatomen eingesetzt werden. Bei den Alkylenoxiden mit 2 bis 24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, $C_1$-$C_{24}$-Ester von epoxidierten Fettsäuren, Epichlorhydrin, Glycidol, und Derivate des Glycidols wie beispielsweise Methylglycidylether, Ethylglycidylether, 2-Ethylhexylglycidylether, Allylglycidylether, Glycidylmethacrylat sowie epoxidfunktionelle Alkyloxysilane wie beispielsweise 3-Glycidyloxypropyltrimethoxysilan, 3-Glycidyloxypropyltriethoxysilan, 3-Glycidyloxypropyltripropoxysilan, 3-Glycidyloxypropyl-methyl-dimethoxysilan, 3-Glycidyloxypropyl-ethyldiethoxysilan, 3-Glycidyloxypropyltriisopropoxysilan.

Im erfindungsgemäßen Verfahren werden bevorzugt Propylenoxid und/oder Ethylenoxid eingesetzt. Besonders bevorzugt wird reines Propylenoxid bzw. ein Gemisch aus Propylenoxid und Ethylenoxid mit bis zu 75 Gew.-% Ethylenoxid, bezogen auf die Gesamtmasse der dosierten Alkylenoxide, eingesetzt. Die Alkylenoxide können dem Reaktor als Einzelkomponenten oder als Gemisch zugeführt werden. Es ist ebenfalls möglich mehrere Alkylenoxide dem Reaktor nacheinander zuzuführen, womit sich Polyetherketten mit Blockstruktur realisieren lassen. Bei der Dosierung mehrerer Alkylenoxide ist es möglich die Zusammensetzung des zugeführten Alkylenoxidstroms kontinuierlich oder instantan zu ändern.

Weitere nach dem erfindungsgemäßen Verfahren mit Alkylenoxiden unter DMC-Katalyse copolymerisierbare Monomere sind beispielsweise Lactone, Lactide, Säureanhydride, cyclische Carbonate und Kohlendioxid. Ihre Verwendung wird beschrieben in US-A 3538043, US-A 4500704, US-A 5032671, US-A 6646100, EP-A 222453 und WO-A 2008/013731.

Den Endprodukten können ebenfalls gegebenenfalls Alterungsschutzmittel wie z. B. Antioxidantien zugesetzt werden.

In einer Ausführungsform wird die H-funktionelle Starterverbindung mit DMC-Katalysator versetzt und in einen Reaktor gegeben, bzw. die H-funktionelle Starterverbindung und der DMC-Katalysator in einen Reaktor gegeben. Der H-funktionellen Starterverbindung können vor der Zugabe des DMC-Katalysators außerdem zusätzlich geringe Mengen (1 bis 500 ppm) organischer oder anorganischer Säuren zugesetzt werden, wie beispielsweise in WO-A 99/14258 beschrieben.

In einer bevorzugten Verfahrensweise wird der Reaktorinhalt zunächst bei Temperaturen von 60 bis 160 °C, bevorzugt 100 bis 155 °C, ganz besonders bevorzugt 110 bis 155 °C mit Inertgas (Stickstoff oder ein Edelgas wie beispielsweise Argon) über einen Zeitraum von bevorzugt 10 bis 60 min unter Rühren gestrippt. Beim Strippen werden flüchtige Bestandteile unter Einleiten von Inertgasen in die Flüssigphase bei gleichzeitig angelegtem Vakuum, bei einem absoluten Druck von 5 bis 500 mbar, entfernt. Die Temperatur kann anschließend auf die Reaktionstemperatur des nachfolgenden Schritts eingestellt werden, sofern diese nicht identisch mit der Stripptemperatur ist. Die entgültige Reaktionstemperatur kann aber auch erst in der Anfangsphase der Alkylenoxiddosierung eingestellt werden. Die Reaktionstemperatur bei der Polymerisation beträgt beispielsweise 110 - 150 °C, bevorzugt 130 - 150 °C und besonders bevorzugt 140 - 150 °C. Gegenstand der Erfindung ist somit auch ein Verfahren zur Herstellung von Polyetherpolyolen mit Äquivalentmolmassen von 8000 bis 20000 g/mol, bevorzugt von 9000 bis 20000 g/mol, besonders bevorzugt von 10000 bis 16000 g/mol, wobei

(α) in einem Reaktor der DMC-Katalysator und eine oder mehrere H-funktionelle Starterverbindungen vorgelegt werden und bei einer Temperatur von 60 bis 160 °C, bevorzugt 100 bis 155 °C, ganz besonders bevorzugt von 110 bis 155 °C Inertgas (Stickstoff oder ein Edelgas wie beispielsweise Argon), bevorzugt in das Gemisch aus DMC-Katalysator und einer oder mehreren H-funktionellen Starterverbindungen, eingeleitet wird und gleichzeitig durch Entfernen des Inertgases ein reduzierter Druck (absolut) von 5 mbar bis 500 mbar, bevorzugt von 40 mbar bis 200 mbar im Reaktor eingestellt wird ("Strippen"),

(β) anschließend ein oder mehrere Alkylenoxide über einen Zeitraum von 15 bis 23 h in den Reaktor dosiert werden ("Polymerisation"), beispielsweise bei einer Temperatur von 110-150 °C, bevorzugt 130 - 150 °C und besonders bevorzugt 140 - 150 °C.

In einer besonders bevorzugten Verfahrensweise wird in einem der Polymerisation (siehe oben Schritt β) vorgelagerten Verfahrensschritt der DMC-Katalysator durch Eindosieren von typischerweise 2 bis 20 Gew.-%, bezogen auf die Summe der in Schritt (α) eingesetzten ein oder mehreren H-funktionellen Starterverbindungen, zunächst separat aktiviert. Die Zugabe eines oder mehrerer Alkylenoxide kann vor, während oder nach dem Aufheizen des Reaktorinhaltes auf die Stripp- bzw. Reaktionstemperatur geschehen; sie erfolgt bevorzugt nach dem Strippen. Nach Unterbrechung der Alkylenoxiddosierung, nachdem typischerweise 2 bis 20 Gew.-% Alkylenoxid, bezogen auf die Summe der in Schritt (α) eingesetzten ein oder mehreren H-funktionellen Starterverbindungen dosiert worden sind, macht sich die Aktivierung des DMC-Katalysators durch einen beschleunigten Abfall des Reaktordruckes bemerkbar, wodurch der beginnende Alkylenoxidumsatz angezeigt wird. Dem Reaktionsgemisch wird sodann die verbleibende Menge Alkylenoxid bzw. Alkylenoxidgemisch kontinuierlich über einen Zeitraum von 15 bis 23 h zugeführt, wobei eine Reaktionstemperatur von 110 bis 150 °C, bevorzugt 130 bis 150 °C und besonders bevorzugt 140 bis 150 °C gewählt wird. Gegenstand der Erfindung ist somit auch ein Verfahren zur Herstellung von Polyetherpolyolen mit Äquivalentmolmassen von 8000 bis 20000 g/mol, bevorzugt von 9000 bis 20000 g/mol, besonders bevorzugt von 10000 bis 16000 g/mol, wobei

(α)

(α1) in einem Reaktor der DMC-Katalysator und eine oder mehrere H-funktionelle Starterverbindungen vorgelegt werden und in den Reaktor, bevorzugt in das Gemisch aus DMC-Katalysator und einer oder mehreren H-

7

funktionellen Starterverbindungen bei einer Temperatur von 60 bis 160 °C, bevorzugt 100 bis 155 °C, ganz besonders bevorzugt 110 bis 155 °C Inertgas (Stickstoff oder ein Edelgas wie beispielsweise Argon) eingeleitet wird und gleichzeitig durch Entfernen des Inertgases ein reduzierter Druck (absolut) von 5 mbar bis 500 mbar, bevorzugt von 40 mbar bis 200 mbar im Reaktor eingestellt wird ("Strippen"),

(α2) zu dem Gemisch aus Schritt (α1) eine Teilmenge von einem oder mehreren Alkylenoxiden gegeben wird, vorzugsweise von 2 bis 20 Gew.-% (bezogen auf die Summe der in Schritt (α1) eingesetzten ein oder mehreren H-funktionelle Starterverbindungen) an einem oder mehreren Alkylenoxiden ("Aktivierung"),

(β) anschließend die verbliebene Teilmenge von einem oder mehreren Alkylenoxiden über einen Zeitraum von 15 bis 23 h in den Reaktor dosiert werden ("Polymerisation"), beispielsweise bei einer Temperatur von 110 - 150 °C, bevorzugt 130 - 150 °C und besonders bevorzugt 140 - 150 °C.

Bei allen beschriebenen Ausführungsformen kann die Reaktionstemperatur während der Polymerisation (Schritt (β)) innerhalb der beschriebenen Temperaturgrenzen variiert werden. Ebenfalls können ein oder mehrere Alkylenoxide dem Reaktor auf unterschiedliche Weise zugeführt werden: Möglich ist eine Dosierung in die Gasphase oder direkt in die Flüssigphase, z. B. über ein Tauchrohr oder einen in der Nähe des Reaktorbodens in einer gut durchmischten Zone befindlichen Verteilerring. Die Dosierung in die Flüssigphase ist die bevorzugte Variante. Bei Dosierung in die Flüssigphase sollten die Dosieraggregate selbstleerend ausgelegt sein, beispielsweise durch Anbringen der Dosierbohrungen an der Unterseite des Verteilerrings. Die Alkylenoxide werden dem Reaktor kontinuierlich derart zugeführt, dass die sicherheitstechnischen Druckgrenzen des verwendeten Reaktorsystems nicht überschritten werden. Insbesondere ist bei der Dosierung von ethylenoxidhaltigen Alkylenoxidgemischen oder reinem Ethylenoxid darauf zu achten, dass ein ausreichender Inertgaspartialdruck im Reaktor während der Anfahr- und Dosierphase aufrechterhalten wird. Dieser kann beispielsweise durch ein Edelgas (wie beispielsweise Argon) oder Stickstoff eingestellt werden. Die Dosierrate der Alkylenoxide kann in der Polymerisationsphase (Schritt (β)) konstant gehalten werden oder alternativ stufenweise oder kontinuierlich verändert werden. Beispielsweise kann die Alkylenoxiddosierrate in der Polymerisationsphase (Schritt (β)) zwischen 4500 g Alkylenoxid / (mol Hydroxygruppen x h) und 50 g Alkylenoxid / (mol Hydroxygruppen x h), bevorzugt zwischen 2000 g Alkylenoxid / (mol Hydroxygruppen x h) und 50 g Alkylenoxid / (mol Hydroxygruppen x h), besonders bevorzugt zwischen 1000 g Alkylenoxid / (mol Hydroxygruppen x h) und 70 g Alkylenoxid / (mol Hydroxygruppen x h) und ganz besonders bevorzugt zwischen 750 g Alkylenoxid / (mol Hydroxygruppen x h) und 100 g Alkylenoxid / (mol Hydroxygruppen x h) betragen, wobei die Alkylenoxiddosierrate konstant gehalten werden oder stufenweise oder kontinuierlich verändert werden kann. Die Alkylenoxiddosierrate kann während eines Reaktionsansatzes sowohl gesteigert als auch gesenkt werden. In einer bevorzugten Ausführungsform der Erfindung wird die Alkylenoxiddosierrate während eines Reaktionsansatzes gesenkt.

Vorteilhafterweise kann durch apparative Maßnahmen, beispielsweise durch die Montage von Rückschlagklappen, ein Rückströmen von Reaktionsmedium in die Dosieraggregate verhindert werden.

Werden mehrere Alkylenoxide im Schritt der Polymerisation dosiert, können die jeweiligen Alkylenoxide dem Reaktor separat oder als Alkylenoxid-Mischung zugeführt werden. Eine Vermischung der Alkylenoxide kann beispielsweise durch ein in der gemeinsamen Dosierstrecke befindliches Mischaggregat erreicht werden ("inline-blending"). Es hat sich auch bewährt, Alkylenoxide pumpendruckseitig in einen beispielsweise über Wärmetauscher geführten Umpumpkreislauf einzeln oder (vor-)gemischt zu dosieren. Für die gute Durchmischung mit dem Reaktionsmedium ist es dann von Vorteil, ein hochscherendes Mischaggregat in den Alkylenoxid-/Reaktionsmediumstrom zu integrieren. Die Temperatur der exothermen Polymersation (Alkylenoxidadditionsreaktion) wird durch Kühlung auf dem gewünschten Niveau gehalten bzw. auf das gewünschte Niveau eingestellt. Gemäß dem Stand der Technik zur Auslegung von Polymerisationsreaktoren für exotherme Reaktionen (z.B. Ullmann's Encyclopedia of Industrial Chemistry, Vol. B4, pp 167ff, 5th Ed., 1992) erfolgt eine solche Kühlung im Allgemeinen über die Reaktorwand (z.B. Doppelmantel, Halbrohrschlange) sowie mittels weiterer intern im Reaktor und/oder extern im Umpumpkreislauf angeordneter Wärmetauscherflächen, z.B. an Kühlschlangen, Kühlkerzen, Platten- Rohrbündel- oder Mischerwärmetauschern Diese sollten so ausgelegt sein, dass auch zu Beginn der Dosierphase, d. h. bei kleinem Füllstand, effektiv gekühlt werden kann.

Generell sollte in allen Reaktionsphasen durch Auslegung und Einsatz handelsüblicher Rührorgane für eine gute Durchmischung des Reaktorinhaltes gesorgt werden, wobei hier insbesondere ein- oder mehrstufig angeordnete Rührer oder großflächig über die Füllhöhe wirkende Rührertypen geeignet sind (siehe z. B. Handbuch Apparate; Vulkan-Verlag Essen, 1. Aufl. (1990), S.188 - 208). Technisch besonders relevant ist hierbei eine im Mittel über den gesamten Reaktorinhalt eingetragene Mischenergie, die im Allgemeinen im Bereich von 0,2 bis 5 W/1 liegt, mit entsprechend höheren lokalen Leistungseinträgen im Bereich der Rührorgane selbst und ggf. bei niedrigeren Füllständen. Um eine optimale Rührwirkung zu erzielen, können im Reaktor gemäß allgemeinem Stand der Technik Kombinationen aus Stromstörern (z. B. Flach- oder Rohrstromstörer) und Kühlschlangen (oder Kühlkerzen) angeordnet werden, die sich auch über den Behälterboden erstrecken können. Die Rührleistung des Mischaggregates kann während der Dosierphase auch füllstandsabhängig variiert werden, um in kritischen Reaktionsphasen einen besonders hohen Energieeintrag zu gewährleisten. Beispielsweise kann es vorteilhaft sein, feststoffhaltige Dispersionen, die zu Reaktionsbeginn beispielsweise bei der Verwendung von Saccharose vorliegen können, besonders intensiv zu durchmischen. Außerdem sollte insbesondere beim Einsatz fester H-funktioneller Starterverbindungen durch die Wahl des Rühraggregates sichergestellt werden, dass eine ausreichende Dispergierung des Feststoffes im Reaktionsgemisch gewährleistet ist. Bevorzugt werden hier bodengängige Rührstufen sowie besonders zur Suspendierung geeignete Rührorgane eingesetzt. Ferner sollte die Rührergeometrie zur Minderung des Aufschäumens von Reaktionsprodukten beitragen. Das Aufschäumen von Reaktionsgemischen kann beispielsweise nach Ende der Dosier- und Nachreaktionsphase beobachtet werden, wenn Restalkylenoxide zusätzlich im Vakuum bei absoluten Drücken im Bereich von 1 bis 500 mbar entfernt werden. Für solche Fälle haben sich Rührorgane als geeignet herausgestellt, die eine kontinuierliche Durchmischung der Flüssigkeitsoberfläche erzielen. Je nach Anforderung weist die Rührwelle ein Bodenlager und gegebenenfalls weitere Stützlager im Behälter auf. Der Antrieb der Rührerwelle kann dabei von oben oder unten erfolgen (mit zentrischer oder exzentrischer Anordnung der Welle).

Alternativ ist es auch möglich, die notwendige Durchmischung ausschließlich über einen Wärmetauscher geführten Umpumpkreislauf zu erzielen oder diesen zusätzlich zum Rühraggregat als weitere Mischkomponente zu betreiben, wobei der Reaktorinhalt nach Bedarf (typischerweise 1 bis 50 mal pro Stunde) umgepumpt wird.

Für die Durchführung des erfindungsgemäßen Verfahrens sind die unterschiedlichsten Reaktortypen geeignet. Vorzugsweise werden zylinderförmige Behälter eingesetzt, welche ein Höhen-/Durchmesserverhältnis von 1:1 bis 10:1 besitzen. Als Reaktorböden kommen beispielsweise Kugel-, Klöpper-, Flach,- oder Konusböden in Frage.

Nach Ende der Alkylenoxiddosierung kann sich eine Nachreaktionsphase anschließen, in der die Abnahme der Konzentration an unreagiertem Alkylenoxid durch Überwachung des Drucks quantifiziert werden kann. Gegebenenfalls kann das Reaktionsgemisch nach Ende der Nachreaktionsphase von kleinen Mengen an nicht umgesetzten Alkylenoxiden beispielsweise im Vakuum, bei einem absoluten Druck von 1 bis 500 mbar, oder durch Strippen quantitativ entfernt werden. Durch Strippen werden flüchtige Bestandteile, wie beispielsweise (Rest-)Alkylenoxide, unter Einleiten von Inertgasen oder Wasserdampf in die Flüssigphase bei gleichzeitig angelegtem Vakuum (beispielsweise durch Durchleiten von Inertgas bei einem Absolutdruck von 5 bis 500 mbar) entfernt. Das Entfernen flüchtiger Bestandteile, wie beispielsweise nicht umgesetzter Alkylenoxide, entweder im Vakuum oder durch Strippen, erfolgt im Allgemeinen bei Temperaturen von 20 bis 200 °C, bevorzugt bei 50 bis 160 °C und vorzugsweise bei Reaktionstemperatur unter Rühren. Solche Strippvorgänge können auch in sogenannten Strippkolonnen durchgeführt werden, in denen dem Produktstrom ein Inertgas- oder Wasserdampfstrom entgegengeleitet wird. Nach Erreichen von Druckkonstanz bzw. nach Entfernen flüchtiger Bestandteile durch Vakuum und/oder Strippen kann das Produkt aus dem Reaktor abgelassen werden.

Im Allgemeinen ist bekannt, dass DMC-Katalysatoren gegenüber polaren Verunreinigungen des Reaktionsgemisches, insbesondere der H-funktionellen Starterverbindung(en) empfindlich sind. Die DMC-Katalysatoren können dann während der Reaktionsinitiierungsphase nicht oder zumindest weniger effektiv in die polymerisationsaktive Form überführt werden. Verunreinigungen können beispielsweise Wasser oder Verbindungen mit basischen Gruppen wie beispielsweise Amine sein. Auch Substanzen mit in enger Nachbarschaft stehenden Carbonylgruppen bzw. zu Hydroxylgruppen benachbarten Carbonylgruppen wirken sich nachteilig auf die Katalysatoraktivität aus. Um Starter mit als Katalysatorgiften anzusehenden Verunreinigungen dennoch DMC-katalysierten Alkylenoxidadditionsreaktionen unterziehen zu können, ist es von Vorteil, die stationäre Konzentration an Katalysatorgiften so niedrig wie möglich zu halten. Dies kann durch ein Verfahren mit einer kontinuierlichen Dosierung der H-funktionellen Starterverbindung(en) erreicht werden. Hierbei werden beispielsweise H-funktionelle Starterverbindungen im Reaktor nicht vollständig, sondern nur teilweise, beispielsweise 0,1 bis 20 Gew.-% der gesamten Menge an eingesetzter H-funktioneller Starterverbindung, vorgelegt, und die verbleibende Menge an H-funktioneller Starterverbindung gemeinsam mit den Alkylenoxiden dem Reaktor während der Reaktion (Schritt (β)) kontinuierlich zugeführt. Die im Reaktor vorgelegte H-funktionelle Starterverbindung wird auch als Startmedium bezeichnet. Als Startmedium kann eine H-funktionelle Starterverbindung eingesetzt werden, die mit der in Schritt (β) eingesetzten H-funktionellen Starterverbindung gleich oder verschieden ist. Vorzugsweise werden als Startmedium eine oder mehrere Komponenten ausgewählt aus der Gruppe bestehend aus Polyetherpolyole, Polycarbonatpolyole, Polyestercarbonatpolyole, Polyethercarbonatpolyole, jeweils beispielsweise mit Äquivalentmolmassen im Bereich von 56 bis 20000 g/mol. Besonders bevorzugt werden als StartmediumPolyetherpolyole mit Äquivalentmolmassen von 4000 bis 20000 g/mol, beispielsweise ein nach dem erfindungsgemäßen Verfahren hergestelltes Polyetherpolyol, das beispielsweise in einem vorhergehenden Ansatz hergestellt wurde, eingesetzt.

Bei der Herstellung von Polyetherpolyolen mit den erfindungsgemäßen Äquivalentmolmassen wurde gefunden, dass es im Falle der Verwendung von H-funktionellen Starterverbindungen mit Äquivalentmolmassen kleiner als 200 g / mol zweckmäßig ist, die Starterdosierraten von gleich oder kleiner als 2,5 % der Alkylenoxiddosierrate genau einzuhalten. Dies hat den Vorteil, dass die resultierenden Produkte mit konstanter Qualität, insbesondere mit konstant niedriger Viskosität, hergestellt werden können. Hierzu wird vorzugsweise die Dosierung der H-funktionellen Starterverbindung(en) mit einer Äquivalentmolmasse kleiner als 200 g / mol als Lösung in einem inerten Lösungsmittel oder als Mischung mit einer weiteren H-funktionellen Starterverbindung mit einer Äquivalentmolmasse größer als 300 g /mol vorgenommen.

In einer weiteren Ausführungsform des erfindungsgemäßen Verfahrens zur Herstellung hochmolekularer Polyetherpolyole mit Äquivalentmolmassen im Bereich von 8000 bis 20000 g / mol, bevorzugt von 9000 bis 20000 g/mol, besonders bevorzugt von 10000 bis 16000 g/mol wird ein Startmedium und DMC-Katalysator im Reaktorsystem vorgelegt, gegebenenfalls wird der DMC-Katalysator wie oben beschrieben (Schritt α2) aktiviert, und die H-funktionelle(n) Starterverbindung(en) wird bzw. werden kontinuierlich gemeinsam mit einem oder mehreren Alkylenoxiden innerhalb eines Zeitraums von 15 bis 23 h zugeführt. Da ggf. sehr kleine Mengen an H-funktioneller Starterverbindung dosiert werden müssen, kann es sich als vorteilhaft erweisen, die H-funktionelle(n) Starterverbindung(en) als Lösung in einem inerten Lösungsmittel oder als Mischung mit einer weiteren H-funktionellen Starterverbindung mit einer Äquivalentmolmasse größer als 300 g / mol zuzuführen. Erfindungsgemäß beträgt die Dosierzeit für die im Schritt der Polymerisation zugesetzte Menge an ein oder mehreren Alkylenoxid(en) 15 bis 23 Stunden. Als Startmedium sind Alkylenoxidadditionsprodukte wie beispielsweise Polyetherpolyole, Polycarbonatpolyole, Polyestercarbonatpolyole, Polyethercarbonatpolyole, jeweils beispielsweise mit Äquivalentmolmassen im Bereich von 56 bis 20000 g/mol, vorzugsweise von 190 bis 20000 g/mol, eine Teilmenge der H-funktionellen Starterverbindung, und/oder Polyetherpolyol mit einer Äquivalentmolmasse von 4000 bis 20000 g/mol, beispielsweise ein nach dem erfindungsgemäßen Verfahren hergestelltes Polyetherpolyol, das beispielsweise in einem vorhergehenden Ansatz hergestellt wurde, geeignet. Vorzugsweise wird eine Teilmenge an H-funktioneller Starterverbindung oder Polyetherpolyol mit einer Äquivalentmolmasse von 8000 bis 20000 g/mol, welches nach dem erfindungsgemäßen Verfahren, beispielsweise in einem vorhergehenden Ansatz, hergestellt wurde, als Startmedium eingesetzt. Besonders bevorzugt wird ein nach dem erfindungsgemäßen Verfahren hergestelltes Polyetherpolyol mit einer Äquivalentmolmasse von 8000 bis 20000 g/mol, das in einem vorhergehenden Ansatz hergestellt wurde, als Startmedium verwendet.

Gegenstand der Erfindung ist auch ein Verfahren zur Herstellung von Polyetherpolyolen mit Äquivalentmolmassen von 8000 bis 20000 g/mol, bevorzugt von 9000 bis 20000 g/mol, besonders bevorzugt von 10000 bis 16000 g/mol, wobei

(α)

(α1) in einem Reaktor der DMC-Katalysator und ein Startmedium vorgelegt werden und gegebenenfalls in den Reaktor, bevorzugt in das Gemisch aus DMC-Katalysator und Startmedium bei einer Temperatur von 60 bis 160 °C, bevorzugt 100 bis 155 °C, ganz besonders bevorzugt 110 bis 155 °C Inertgas (Stickstoff oder ein Edelgas wie beispielsweise Argon) eingeleitet wird und gleichzeitig durch Entfernen des Inertgases ein reduzierter Druck (absolut) von 5 mbar bis 500 mbar, bevorzugt von 40 mbar bis 200 mbar im Reaktor eingestellt wird ("Strippen"),
(α2) gegebenenfalls zu dem Gemisch aus Schritt (α1) eine Teilmenge an ein oder mehreren Alkylenoxiden zugegeben wird, vorzugsweise von 2 bis 20 Gew.-% (bezogen auf die in Schritt (α1) vorgelegte Menge an Startmedium) an ein oder mehreren Alkylenoxiden ("Aktivierung"),

(β) anschließend die Gesamtmenge bzw. die verbliebene Teilmenge an ein oder mehreren Alkylenoxiden sowie die H-funktionelle Starterverbindung (bzw. eine Teilmenge der H-funktionellen Starterverbindung) in den Reaktor dosiert werden und hierbei das eine oder mehrere Alkylenoxide über einen Zeitraum von 15 bis 23 h zugeführt werden ("Polymerisation"), beispielsweise bei einer Temperatur von 110 - 150 °C, bevorzugt 130-150 °C und besonders bevorzugt 140 - 150 °C,

wobei als Startmedium Alkylenoxidadditionsprodukte (wie beispielsweise Polyetherpolyol, Polycarbonatpolyol, Polyestercarbonatpolyol, Polyethercarbonatpolyol, jeweils beispielsweise mit einer Äquivalentmolmasse im Bereich von 56 bis 20000 g/mol, vorzugsweise von 190 bis 20000 g/mol), eine Teilmenge der H-funktionellen Starterverbindung und/oder Polyetherpolyol mit einer Äquivalentmolmasse von 4000 bis 20000 g/mol, beispielsweise ein nach dem erfindungsgemäßen Verfahren hergestelltes Polyetherpolyol, das beispielsweise in einem vorhergehenden Ansatz hergestellt wurde, eingesetzt wird.

In einer alternativen Ausführungsform der Erfindung endet die Dosierung der H-funktionellen Starterverbindung, bevor die sich über einen Zeitraum von 15 bis 23 h erstreckende Dosierung der Alkylenoxide beendet wird. Dies hat den Vorteil, dass ein vollständiger Umsatz der H-funktionellen Starterverbindung mit dem oder den Alkylenoxid(en) erreicht wird. Unter "Schlussphase des Polymerisationsschrittes" wird im Sinne der Erfindung die Zeitspanne ab dem Ende der Dosierung der H-funktionellen Starterverbindung(en) bis zum Ende der Dosierung der Alkylenoxide verstanden. Bei dieser alternativen Ausführungsform kann in der Schlussphase des Polymerisationsschrittes nach Ende der Dosierung der H-funktionellen Starterverbindung(en) die Dosierrate der Alkylenoxide stufenweise oder kontinuierlich verändert werden. Beispielsweise kann die Alkylenoxiddosierrate zwischen 4500 g Alkylenoxid / (mol Hydroxygruppen x h) und 50 g Alkylenoxid / (mol Hydroxygruppen x h), bevorzugt zwischen 2000 g Alkylenoxid / (mol Hydroxygruppen x h) und 50 g Alkylenoxid / (mol Hydroxygruppen x h), besonders bevorzugt zwischen 1000 g Alkylenoxid / (mol Hydroxygruppen x h) und 70 g Alkylenoxid / (mol Hydroxygruppen x h) und ganz besonders bevorzugt zwischen 750 g Alkylenoxid /(mol Hydroxygruppen x h) und 100 g Alkylenoxid / (mol Hydroxygruppen x h) variiert werden, wobei sich die Größe "mol Hydroxygruppen" auf die zum Zeitpunkt des Endes der Dosierung der H-funktionellen Starterverbindung(en) im Reaktionsgemisch vorliegenden Stoffmenge an Hydroxygruppen bezieht. Die Alkylenoxiddosierrate kann während der Schlussphase des Polymerisationsschrittes sowohl gesteigert als auch gesenkt werden. In einer bevorzugten Ausführungsform der Erfindung wird die Alkylenoxiddosierrate während der Schlussphase des Polymerisationsschrittes gesenkt. Alternativ kann das Alkylenoxid nach Ende der Dosierung der H-funktionellen Starterverbindung auch gewechselt werden, womit sich mit dieser Verfahrensweise Polyetherpolyole mit Multiblockstrukturen herstellen lassen. Es ist auch möglich, die Dosierung der H-funktionellen Starterverbindung und die Alkylenoxiddosierung gleichzeitig zu beenden. Es ist ebenfalls möglich während der gemeinsamen Dosierung der H-funktionellen Starterverbindung(en) und dem oder den Alkylenoxid(en) das Verhältnis der Dosierraten von den ein oder mehreren H-funktionellen Starterverbindungen und den ein oder mehreren Alkylenoxiden zu variieren. Vorzugsweise genügt das Verhältnis Alkylenoxiddosierrate ($D_A$) / Dosierrate der H-funktionellen Starterverbindung ($D_H$) in allen Phasen der gemeinsamen Dosierphase folgender Ungleichung:

$$(D_H \text{ x OH-Zahl}_{\text{H-funktionelle Starterverbindung}}) / (D_H + D_A) \geq \text{OH-Zahl}_{\text{Endprodukt}} \qquad \text{(VIII)}$$

Nach Zudosierung der Reagenzien kann sich eine Nachreaktionsphase anschließen, in der der Verbrauch an Alkylenoxid im Allgemeinen durch Überwachung des Drucks quantifiziert werden kann. Nach Erreichen von Druckkonstanz kann das Produkt, gegebenenfalls wie oben beschrieben nach Anlegen von Vakuum oder durch Strippen zur Entfernung von nicht umgesetzten Alkylenoxiden, abgelassen werden.

In einer weiteren Ausführungsform des erfindungsgemäßen Verfahrens wird das Reaktionsprodukt kontinuierlich dem Reaktor entnommen. In dieser Verfahrensweise wird ein Startmedium und eine Teilmenge an DMC-Katalysator im Reaktorsystem vorgelegt und eine oder mehrere H-funktionelle Starterverbindungen mit Äquivalentmolmassen zwischen bevorzugt 18 und 2000 g /mol, besonders bevorzugt von 56 bis 1200 g/mol werden kontinuierlich gemeinsam mit einem oder mehreren Alkylenoxiden und DMC-Katalysator dem Reaktorsystem zugeführt. Das Reaktionsprodukt wird dem Reaktorsystem kontinuierlich nach einer mittleren Verweilzeit von 15 bis 23 Stunden entnommen. Vorzugsweise erfolgt die Entnahme aus dem Abschnitt des Reaktorsystems, in welchen auch eine oder mehrere Alkylenoxide dosiert werden. Als Startmedium dieses vollkontinuierlichen Polyetherpolyolherstellungsprozesses sind beispielsweise H-funktionelle Starterverbindungen mit einer Äquivalentmolmasse von 150 bis 2000 g / mol geeignet. Als Startmedium geeignet sind insbesondere Alkylenoxidadditionsprodukte (wie beispielsweise Polyetherpolyole) und/oder ein nach dem erfindungsgemäßen Verfahren hergestelltes Polyetherpolyol, das beispielsweise in einer vorhergehenden Produktionskampagne hergestellt wurde. Bevorzugt wird als Startmedium ein nach dem erfindungsgemäßen Verfahren hergestelltes Polyetherpolyol, das beispielsweise in einer vorhergehenden Produktionskampagne hergestellt wurde, eingesetzt. In einer ebenfalls bevorzugten Verfahrensweise wird eine Teilmenge an H-funktioneller Starterverbindung mit einer Äquivalentmolmasse von 150 bis 2000 g/mol und eine Teilmenge an DMC-Katalysator im Reaktorsystem vorgelegt und die verbliebene Teilmenge der ein oder mehreren H-funktionellen Starterverbindungen mit einer Äquivalentmolmasse von 150 bis 2000 g/mol kontinuierlich gemeinsam mit einem oder mehreren Alkylenoxiden und DMC-Katalysator dem Reaktorsystem zugeführt, wobei das Reaktionsprodukt dem Reaktorsystem kontinuierlich nach einer mittleren Verweilzeit von 15 bis 23 Stunden entnommen wird, und vorzugsweise die Entnahme des Reaktionsprodukts aus dem Abschnitt des Reaktorsystems erfolgt, in welchen auch eine oder mehrere Alkylenoxide dosiert werden. Gegenstand der Erfindung ist also auch ein Verfahren zur Herstellung von Polyetherpolyolen mit Äquivalentmolmassen von 8000 bis 20000 g/mol, bevorzugt von 9000 bis 20000 g/mol, besonders bevorzugt von 10000 bis 16000 g/mol, wobei

(α)

(α1) in einem Reaktorsystem ein Startmedium und eine Teilmenge DMC-Katalysator vorgelegt werden und gegebenenfalls
(α2) zu dem Gemisch aus Schritt (α1) eine Teilmenge an ein oder mehreren Alkylenoxiden zugegeben wird ("Aktivierung")

(β) eine oder mehrere H-funktionelle Starterverbindungen kontinuierlich gemeinsam mit Alkylenoxid und weiterem DMC-Katalysator zudosiert werden und das Reaktionsprodukt dem Reaktorsystem kontinuierlich nach einer mittleren Verweilzeit von 15 bis 23 Stunden entnommen wird,

wobei als Startmedium Alkylenoxidadditionsprodukte (wie beispielsweise Polyetherpolyol, Polycarbonatpolyol, Polyestercarbonatpolyol, Polyethercarbonatpolyol, jeweils beispielsweise mit einer Äquivalentmolmasse im Bereich von 56 bis 20000 g/mol, vorzugsweise von 190 bis 20000 g/mol)" eine Teilmenge der H-funktionellen Starterverbindung und/oder Polyetherpolyol mit einer Äquivalentmolmasse von 4000 bis 20000 g/mol, beispielsweise ein nach dem erfindungsgemäßen Verfahren hergestelltes Polyetherpolyol, das beispielsweise in einem vorhergehenden Ansatz hergestellt wurde, eingesetzt wird.

An diese oben beschriebene vollkontinuierlichen Verfahrenweise können sich kontinuierliche Nachreaktionsschritte, beispielsweise in einer Reaktorkaskade oder in einem Rohrreaktor anschließen. Flüchtige Bestandteile können im Vakuum und/oder durch Strippen, wie oben beschrieben, entfernt werden. Die verschiedenen Verfahrensvarianten bei der Herstellung von Polyetherpolyolen nach den Alkylenoxidadditionsverfahren unter DMC-Katalyse sind beispielsweise beschrieben in WO-A 97/29146 und WO-A 98/03571.

Die nach dem erfindungsgemäßen Verfahren hergestellten Polyetherpolyole können allein oder gegebenenfalls im Gemisch mit weiteren isocyanatreaktiven Komponenten mit organischen Polyisocyanaten, gegebenenfalls in Gegenwart von Treibmitteln, in Gegenwart von Katalysatoren und gegebenenfalls mit weiteren Zusatzstoffen wie z.B. Zellstabilisatoren zur Reaktion gebracht werden und so als Komponenten von massiven oder geschäumten Polyurethanen, insbesondere Polyurethan-Weichschaum wie beispielsweise Polyurethan-Weichblockschaum und Polyurethan-Weichformschaum, dienen. Die nach dem erfindungsgemäßen Verfahren hergestellten Polyetherpolyole können beispielsweise auch als Komponenten für Kleb- und Dichtstoffmaterialien verwendet werden und insbesondere als Vorläuferpolyole für die Herstellung silanterminierter Polyether dienen, die ihrerseits Einsatz in feuchtigkeitshärtenden Dichtstoffsystemen finden können.

Polyurethane, bevorzugt massive oder geschäumte Polyurethane, insbesondere Polyurethan-Weichschäume wie beispielsweise Polyurethan-Weichblockschäume und Polyurethan-Weichformschäume, enthaltend die nach dem erfindungsgemäßen Verfahren hergestellten Polyetherpolyole sind ebenfalls Gegenstand der Erfindung.

Beispiele

Die Bestimmung der OH-Zahlen erfolgte gemäß der Vorschrift der DIN 53240. Die Viskositäten wurden mittels Rotationsviskosimeter (Physica MCR 51, Hersteller: Anton Paar) nach der Vorschrift der DIN 53018 ermittelt.

Die Molmassenverteilung wurde mittels Größenausschlusschromatographie (SEC) ermittelt. Verwendet wurde das Gerät Agilent 1100 Series der Fa. Agilent. Angegeben wird die Polydispersität PD für die Molekulargewichtsverteilung $M_w/M_n$, wobei $M_w$ für die gewichtsgemittelte Molmasse und $M_n$ für die zahlengemittelte Molmasse stehen. Weitere Angaben zu dieser Analytik:

- Säulenkombination: 1 Vorsäule PSS, 5 $\mu$l, 8x50mm; 2 PSS SVD, 5 $\mu$l, 100 A°, 8x300mm; 2 PSS SVD, 5 $\mu$l, 1000 A°, 8x300mm, PSS ist der Hersteller der Säulen (Polymer Standard Solutions, Mainz)
- Auswertesoftware: WIN GPC der Fa. PSS
- Lösungsmittel: THF (Merck LiChrosolv)
- Flussrate: 1 ml / min
- Detektortyp: RI-Detektor (Brechungsindex), Shodex RI 74
- Verwendete Kalibrationsstandards: Kalibrierstandard der Fa. PSS auf Basis Polystyrol.

Eingesetzte Rohstoffe

Katalysator für die Alkylenoxidaddition (DMC-Katalysator):

Doppelmetallcyanid-Katalysator, enthaltend Zinkhexacyanocobaltat, tert.-Butanol und Polypropylenglykol mit einem zahlenmittleren Molekulargewicht von 1000 g/mol; beschrieben in WO-A 01/80994, Beispiel 6.

ACCLAIM® Polyol 2200N:

Polypropylenglykol mit einer Molmasse von 2000 g /mol, hergestellt über DMC-Katalyse (30 ppm DMC-Katalysator), erhältlich von der Bayer MaterialScience AG.

IRGANOX® 1076:

Octadecyl-3-(3,5-di-tert.butyl-4-hydroxyphenyl)propionat. (BASF SE))

Beispiel 1 und Vergleichsbeispiele 2 und 3:

In einen 10 1 Laborautoklaven wurden unter Stickstoffatmosphäre 471,4 g ACCLAIM® Polyol 2200N gegeben. Nach Zugabe von 0,487 g DMC-Katalysator wurde der Inhalt des Autoklaven 30 min bei 130 °C und Rühren (Gitterrührer) mit 350 U/min im Vakuum bei einem absoluten Druck von 100 bis 120 mbar unter Einleiten von 50 ml Stickstoff pro Minute über einen unter dem Flüssigkeitsspiegel liegenden Verteilerring gestrippt. Über diesen Verteilerring wurden sodann, zunächst ebenfalls bei 130 °C und Rühren mit 350 U/min, insgesamt 5528,7 g Propylenoxid über den in Tabelle 1 angegebenen Zeitraum mit konstanter Dosierrate und einer Rührerdrehzahl von 350 U/min eindosiert. Nach Dosierung von 50 g Propylenoxid wurde die Reaktionstemperatur innerhalb von 7 min auf 145 °C angehoben und bis zum Ende der Propylenoxiddosierung bei dieser Temperatur gehalten. Nach einer Nachreaktionszeit von 21 min wurde 0,5 h bei Reaktionstemperatur und bei einem absoluten Druck von 1 mbar ausgeheizt, danach auf 80 °C abgekühlt und 3,0 g IRGANOX® 1076 zugegeben. Die physikalischen Eigenschaften sowie weitere Reaktionsparameter sind in Tabelle 1 angegeben.

**Tabelle 1**

| Beispiel | Propylenoxiddosierzeit [h] | OH-Zahl [mg KOH / g] | Viskosität bei 25°C [mPas] | Berechnete Viskositätserwartungswerte $\eta$ [mPas]*) | Polydispersität |
|---|---|---|---|---|---|
| 1 | 18 | 4,8 | 37900 ($\eta_1$) | - | 1,09 |
| 2 (Vergleich) | 14 | 5,0 | 39000 | $\eta_2$ = 32990 | 1,09 |
| 3 (Vergleich) | 6 | 4,8 | 42190 | $\eta_3$ = 37900 | 1,15 |

*): In dieser Spalte wurden die Erwartungswerte der Viskositäten $\eta_2$ und $\eta_3$ für die Vergleichspolyole 2 und 3 nach der für solch langkettige Polypropylenglykole gültigen Beziehung gemäß Schema IX (D. Zhu, M. A. Haidekker, J.-S. Lee, Y.-Y. Won, J. C.-M. Lee, Macromolecules 2007, 40, 7730 - 7732) aus der gemessenen Viskosität ($\eta_1$) des erfindungsgemäßen Beispiels 1 berechnet. Der Einfluss der Molmasse auf die Viskositäten lässt sich damit herausrechnen und die Vorteile der erfindungsgemäßen Verfahrensweise treten noch deutlicher zutage:

$$\eta_{(2\,bzw.\,3)} = \eta_1 \times \left(M_{(2\,bzw.\,3)}/M_1\right)^{3,4} \hspace{4cm} (IX)$$

wobei $M_1$, $M_2$ bzw. $M_3$ die jeweilige Äquivalentmolmasse des Polypropylenglykols aus Beispiel 1 bzw. Vergleichsbeispiel 2 bzw. 3 bedeutet.

Beispiel 4 und Vergleichsbeispiel 5:

In einen 101 Laborautoklaven wurden unter Stickstoffatmosphäre 471,4 g ACCLAIM® Polyol 2200N gegeben. Nach Zugabe von 0,487 g DMC-Katalysator wurde der Inhalt des Autoklaven 30 min bei 130 °C und Rühren (Gitterrührer) mit 350 U/min im Vakuum bei einem absoluten Druck von 100 bis 120 mbar unter Einleiten von 50 ml Stickstoff pro Minute über einen unter dem Flüssigkeitsspiegel liegenden Verteilerring gestrippt. Über diesen Verteilerring wurden sodann, zunächst ebenfalls bei 130 °C und Rühren mit 350 U/min, insgesamt 5528,7 g Propylenoxid über den in Tabelle 1 angegebenen Zeitraum mit konstanter Dosierrate und einer Rührerdrehzahl von 350 U/min eindosiert. Nach Dosierung von 50 g Propylenoxid wurde die Reaktionstemperatur innerhalb von 7 min auf 135 °C angehoben und bis zum Ende der Propylenoxiddosierung bei dieser Temperatur gehalten. Nach einer Nachreaktionszeit von 21 min wurde 0,5 h bei Reaktionstemperatur und bei einem absoluten Druck von 1 mbar ausgeheizt, danach auf 80 °C abgekühlt und 3,0 g IRGANOX® 1076 zugegeben. Die physikalischen Eigenschaften sowie weitere Reaktionsparameter sind in Tabelle 2 angegeben.

**Tabelle 2**

| Beispiel | Propylenoxiddosierzeit [h] | OH-Zahl [mg KOH / g] | Viskosität bei 25°C [mPas] | Berechnete Viskositätserwartungswerte $\eta$ [mPas][*] | Polydispersität |
|---|---|---|---|---|---|
| 4 | 18 | 4,8 | 40050 ($\eta_4$) | - | 1,09 |
| 5 (Vergleich) | 14 | 4,9 | 41200 | $\eta_5 = 37340$ | 1,09 |

[*]: In dieser Spalte wurde der Erwartungswert der Viskosität $\eta_5$ für das Vergleichspolyol 5 nach der für solch langkettige Polypropylenglykole gültigen Beziehung gemäß Schema X (D. Zhu, M. A. Haidekker, J.-S. Lee, Y.-Y. Won, J. C.-M. Lee, Macromolecules 2007, 40, 7730-7732) aus der gemessenen Viskosität ($\eta_4$) des erfindungsgemäßen Beispiels 4 berechnet. Der Einfluss der Molmasse auf die Viskosität lässt sich damit herausrechnen und die Vorteile der erfindungsgemäßen Verfahrensweise treten noch deutlicher zutage:

$$\eta_5 = \eta_4 \text{ x } (M_5/M_4)^{3,4} \hspace{4cm} (X)$$

wobei $M_4$ bzw. $M_5$ die jeweilige Äquivalentmolmasse des Polypropylenglykols aus Beispiel 4 bzw. Vergleichsbeispiel 5 bedeutet.

Beispiel 6:

In einen 10 l Laborautoklaven wurden unter Stickstoffatmosphäre 471,4 g ACCLAIM® Polyol 2200N gegeben. Nach Zugabe von 0,480 g DMC-Katalysator wurde der Inhalt des Autoklaven 30 min bei 130 °C und Rühren (Gitterrührer) mit 350 U/min im Vakuum bei einem absoluten Druck von 100 bis 120 mbar unter Einleiten von 50 ml Stickstoff pro Minute über einen unter dem Flüssigkeitsspiegel liegenden Verteilerring gestrippt. Über diesen Verteilerring wurden sodann, zunächst ebenfalls bei 130 °C und Rühren mit 350 U/min, insgesamt 5528,6 g Propylenoxid innerhalb von 18,25 Stunden eindosiert. Nach Dosierung von 50 g Propylenoxid wurde die Reaktionstemperatur innerhalb von 10 min auf 145 °C angehoben und bis zum Ende der Propylenoxiddosierung bei dieser Temperatur gehalten.

Das Propylenoxid wurde dem Autoklaven gemäß folgender Dosierrampe zugeführt:

- 0 bis 2462 g Propylenoxid: 352 g Propylenoxid pro Stunde,
- 2462 bis 4028 g Propylenoxid: Als Funktion der dosierten Masse an Propylenoxid erfolgt eine lineare Absenkung der Dosierrate von 352 g Propylenoxid pro Stunde auf 315 g Propylenoxid pro Stunde,
- 4028 bis 5200 g Propylenoxid: Als Funktion der dosierten Masse an Propylenoxid erfolgt eine lineare Absenkung der Dosierrate von 315 g Propylenoxid pro Stunde auf 220 g Propylenoxid pro Stunde,
- 5200 bis 5500 g Propylenoxid: Als Funktion der dosierten Masse an Propylenoxid erfolgt eine lineare Absenkung der Dosierrate von 220 g Propylenoxid pro Stunde auf 130 g Propylenoxid pro Stunde,
- 5500 bis 5528,6 g Propylenoxid: Als Funktion der dosierten Masse an Propylenoxid erfolgt eine lineare Absenkung der Dosierrate von 130 g Propylenoxid pro Stunde auf 100 g Propylenoxid pro Stunde.

Nach einer Nachreaktionszeit von 26 min. wurde 0,5 h bei Reaktionstemperatur und bei einem absoluten Druck von 1 mbar ausgeheizt, danach auf 80 °C abgekühlt und 3,021 g IRGANOX® 1076 zugegeben. Die physikalischen Eigenschaften sind in Tabelle 3 angegeben.

Vergleichsbeispiel 7:

In einen 10 l Laborautoklaven wurden unter Stickstoffatmosphäre 471,5 g ACCLAIM® Polyol 2200N gegeben. Nach Zugabe von 0,486 g DMC-Katalysator wurde der Inhalt des Autoklaven 30 min bei 130 °C und Rühren (Gitterrührer) mit 350 U/min im Vakuum bei einem absoluten Druck von 100 bis 120 mbar unter Einleiten von 50 ml Stickstoff pro Minute über einen unter dem Flüssigkeitsspiegel liegenden Verteilerring gestrippt. Über diesen Verteilerring wurden sodann, zunächst ebenfalls bei 130 °C und Rühren mit 350 U/min, insgesamt 5528,7 g Propylenoxid innerhalb von 23,5 Stunden eindosiert. Nach Dosierung von 55 g Propylenoxid wurde die Reaktionstemperatur innerhalb von 14 min auf 145 °C angehoben und bis zum Ende der Propylenoxiddosierung bei dieser Temperatur gehalten.

Das Propylenoxid wurde dem Autoklaven gemäß folgender Dosierrampe zugeführt:

- 0 bis 2462 g Propylenoxid: Als Funktion der dosierten Masse an Propylenoxid erfolgt eine Absenkung der Dosierrate von 352 g Propylenoxid pro Stunde auf 315 g Propylenoxid pro Stunde,
- 2462 bis 4028 g Propylenoxid: Als Funktion der dosierten Masse an Propylenoxid erfolgt eine Absenkung der Dosierrate von 315 g Propylenoxid pro Stunde auf 220 g Propylenoxid pro Stunde,
- 4028 bis 5200 g Propylenoxid: Als Funktion der dosierten Masse an Propylenoxid erfolgt eine Absenkung der Dosierrate von 220 g Propylenoxid pro Stunde auf 130 g Propylenoxid pro Stunde,
- 5200 bis 5528,7 g Propylenoxid: Als Funktion der dosierten Masse an Propylenoxid erfolgt eine Absenkung der Dosierrate von 130 g Propylenoxid pro Stunde auf 100 g Propylenoxid pro Stunde.

Nach einer Nachreaktionszeit von 26 min wurde 0,5 h bei Reaktionstemperatur und bei einem absoluten Druck von 1 mbar ausgeheizt, danach auf 80 °C abgekühlt und 3,021 g IRGANOX® 1076 zugegeben. Die physikalischen Eigenschaften sind in Tabelle 3 angegeben.

**Tabelle 3**

| Beispiel | OH-Zahl [mg KOH / g] | Viskosität $\eta$ bei 25 °C [mPas] | Polydispersität |
|---|---|---|---|
| 6 | 5,0 | 35950 | 1,09 |
| 7 (Vergleich) | 5,0 | 42750 | 1,13 |

**Patentansprüche**

1.  Verfahren zur Herstellung von Polyetherpolyolen mit Äquivalentmolmassen von 8000 bis 20000 g/mol aus einer oder mehreren H-funktionellen Starterverbindungen, einem oder mehreren Alkylenoxiden in Gegenwart eines Doppelmetallcyanid (DMC)-Katalysators, **dadurch gekennzeichnet, dass** die Alkylenoxide innerhalb von 15 bis 23 h in den Reaktor dosiert werden und wobei für die Berechnung der Äquivalentmolmasse gilt: Äquivalentmolmasse = 56100 / (OH-Zahl [mg KOH/g]).

2.  Verfahren gemäß Anspruch 1, **dadurch gekennzeichnet, dass**

    (α) in einem Reaktor der DMC-Katalysator und eine oder mehrere H-funktionelle Starterverbindungen vorgelegt werden und bei einer Temperatur von 60 bis 160 °C Inertgas eingeleitet wird und gleichzeitig durch Entfernen des Inertgases ein reduzierter Druck (absolut) von 5 mbar bis 500 mbar im Reaktor eingestellt wird ("Strippen"),
    (β) anschließend ein oder mehrere Alkylenoxide über einen Zeitraum von 15 bis 23 h in den Reaktor dosiert werden ("Polymerisation").

3.  Verfahren gemäß Anspruch 1, **dadurch gekennzeichnet, dass**

    (α)

    (α1) in einem Reaktor der DMC-Katalysator und eine oder mehrere H-funktionelle Starterverbindungen vorgelegt werden und bei einer Temperatur von 60 bis 160 °C Inertgas eingeleitet wird und gleichzeitig durch Entfernen des Inertgases ein reduzierter Druck (absolut) von 5 mbar bis 500 mbar im Reaktor eingestellt wird ("Strippen"),
    (α2) zu dem Gemisch aus Schritt (α1) eine Teilmenge an ein oder mehreren Alkylenoxide zugegeben wird ("Aktivierung"),

    (β) anschließend die verbliebene Teilmenge an einem oder mehreren Alkylenoxiden, über einen Zeitraum von 15 bis 23 h in den Reaktor dosiert wird ("Polymerisation"),

4.  Verfahren gemäß Anspruch 1, **dadurch gekennzeichnet, dass**

    (α) in einem Reaktor der DMC-Katalysator und ein Startmedium vorgelegt werden,
    (β) anschließend die Gesamtmenge an ein oder mehreren Alkylenoxiden über einen Zeitraum von 15 bis 23 h sowie die H-funktionelle Starterverbindung bzw. eine Teilmenge der H-funktionellen Starterverbindung in den Reaktor dosiert werden ("Polymerisation"),

    wobei als Startmedium Alkylenoxidadditionsprodukte, eine Teilmenge der H-funktionellen Starterverbindung und/oder Polyetherpolyol mit einer Äquivalentmolmasse von 4000 bis 20000 g/mol eingesetzt werden.

5.  Verfahren gemäß Anspruch 1, **dadurch gekennzeichnet, dass**

    (α)

    (α1) in einem Reaktor der DMC-Katalysator und ein Startmedium vorgelegt werden,
    (α2) zu dem Gemisch aus Schritt (α1) eine Teilmenge an ein oder mehreren Alkylenoxiden zugegeben wird ("Aktivierung"),

    (β) anschließend die verbliebene Teilmenge an ein oder mehreren Alkylenoxiden über einen Zeitraum von 15 bis 23 h sowie die H-funktionelle Starterverbindung bzw. eine Teilmenge der H-funktionellen Starterverbindung in den Reaktor dosiert werden ("Polymerisation"),

    wobei als Startmedium Alkylenoxidadditionsprodukte, eine Teilmenge der H-funktionellen Starterverbindung und/oder Polyetherpolyol mit einer Äquivalentmolmasse von 4000 bis 20000 g/mol eingesetzt werden.

6.  Verfahren gemäß Anspruch 5, **dadurch gekennzeichnet, dass** in Schritt

    (α1) in einem Reaktor der DMC-Katalysator und eine oder mehrere H-funktionelle Starterverbindungen vorgelegt werden und bei einer Temperatur von 60 bis 160 °C Inertgas eingeleitet wird und gleichzeitig durch Entfernen des Inertgases ein reduzierter Druck (absolut) von 5 mbar bis 500 mbar im Reaktor eingestellt wird ("Strippen").

**7.** Verfahren gemäß Anspruch 1, **dadurch gekennzeichnet, dass**

(α) in einem Reaktorsystem ein Startmedium und eine Teilmenge DMC-Katalysator vorgelegt werden und
(β) eine oder mehrere H-funktionelle Starterverbindungen kontinuierlich gemeinsam mit Alkylenoxid und weiterem DMC-Katalysator zudosiert werden und das Reaktionsprodukt dem Reaktorsystem kontinuierlich nach einer mittleren Verweilzeit von 15 bis 23 Stunden entnommen wird,

wobei als Startmedium Alkylenoxidadditionsprodukte, eine Teilmenge der H-funktionellen Starterverbindung und/oder Polyetherpolyol mit einer Äquivalentmolmasse von 4000 bis 20000 g/mol eingesetzt werden.

**8.** Verfahren gemäß einem der Ansprüche 3, 5 oder 6, **dadurch gekennzeichnet, dass** in Schritt (α2) von 2 bis 20 Gew.-% (bezogen auf die Summe der in Schritt (α1) eingesetzten ein oder mehreren H-funktionelle Starterverbindungen) an einem oder mehreren Alkylenoxiden zugegeben werden und in Schritt (β) die verbliebene Teilmenge an einem oder mehreren Alkylenoxiden zugegeben wird.

**9.** Verfahren nach einem der Ansprüche 2, 3 und 8, wobei die Alkylenoxiddosierrate in Schritt (β) zwischen 4500 g Alkylenoxid / (mol Hydroxygruppen x h) und 50 g Alkylenoxid / (mol Hydroxygruppen x h) beträgt.

**10.** Verfahren gemäß Anspruch 9, wobei die Alkylenoxiddosierrate in Schritt (β) gesenkt wird.

**11.** Verfahren gemäß einem der Ansprüche 1 bis 10, **dadurch gekennzeichnet, dass** die Polymerisation bei einer Temperatur von 110 - 150 °C durchgeführt wird.

**12.** Verfahren gemäß einem der Ansprüche 1 bis 11 zur Herstellung von Polyetherpolyolen mit Äquivalentmolmassen von 9000 bis 20000 g/mol.

**13.** Verfahren gemäß einem der Ansprüche 4, 5, 6, 8, 11 und 12, **dadurch gekennzeichnet, dass** in Schritt (β) die Dosierung der H-funktionellen Starterverbindung beendet wird, bevor die sich über einen Zeitraum von 15 bis 23 h erstreckende Dosierung der Alkylenoxide beendet wird.

**14.** Verfahren gemäß Anspruch 13, wobei nach dem Ende der Dosierung der H-funktionellen Starterverbindung die Dosierrate der Alkylenoxide verändert wird, wobei die e Alkylenoxiddosierrate zwischen 4500 g Alkylenoxid / (mol Hydroxygruppen x h) und 50 g Alkylenoxid / (mol Hydroxygruppen x h) beträgt.

**15.** Verfahren gemäß Anspruch 13, wobei nach dem Ende der Dosierung der H-funktionellen Starterverbindung die Dosierrate der Alkylenoxide gesenkt wird.

## Claims

**1.** Process for the preparation of polyether polyols with equivalent molecular weights of from 8,000 to 20,000 g/mol from one or more H-functional starter compounds and one or more alkylene oxides in the presence of a double metal cyanide (DMC) catalyst, **characterized in that** the alkylene oxides are metered into the reactor in the course of from 15 to 23 h and wherein, for the calculation of the equivalent molecular weight: Equivalent molecular weight = 56,100 / (OH number [mg of KOH/g]).

**2.** Process according to claim 1, **characterized in that**

(α) the DMC catalyst and one or more H-functional starter compounds are initially introduced into a reactor and inert gas is passed in at a temperature of from 60 to 160°C, and a reduced pressure (absolute) of from 5 mbar to 500 mbar is simultaneously established in the reactor by removal of the inert gas ("stripping"),
(β) one or more alkylene oxides are then metered into the reactor over a period of from 15 to 23 h ("polymerization").

**3.** Process according to claim 1, **characterized in that**

(α)

(α1) the DMC catalyst and one or more H-functional starter compounds are initially introduced into a reactor and inert gas is passed in at a temperature of from 60 to 160°C, and a reduced pressure (absolute) of from 5 mbar to 500 mbar is simultaneously established in the reactor by removal of the inert gas ("stripping"),
(α2) a part amount of one or more alkylene oxides is added to the mixture from step (α1) ("activation"),

(β) the remaining part amount of one or more alkylene oxides is then metered into the reactor over a period of from 15 to 23 h ("polymerization").

4.  Process according to claim 1, **characterized in that**

(α) the DMC catalyst and a starting medium are initially introduced into a reactor,
(β) the total amount of one or more alkylene oxides, over a period of from 15 to 23 h, and the H-functional starter compound or a part amount of the H-functional starter compound are then metered into the reactor ("polymerization"),

wherein alkylene oxide addition products, a part amount of the H-functional starter compound and/or polyether polyol with an equivalent molecular weight of from 4,000 to 20,000 g/mol are employed as the starting medium.

5.  Process according to claim 1, **characterized in that**

(α)

(α1) the DMC catalyst and a starting medium are initially introduced into a reactor,
(α2) a part amount of one or more alkylene oxides is added to the mixture from step (α1) ("activation"),

(β) the remaining part amount of one or more alkylene oxides, over a period of from 15 to 23 h, and the H-functional starter compound or a part amount of the H-functional starter compound are then metered into the reactor ("polymerization"),

wherein alkylene oxide addition products, a part amount of the H-functional starter compound and/or polyether polyol with an equivalent molecular weight of from 4,000 to 20,000 g/mol are employed as the starting medium.

6.  Process according to claim 5, **characterized in that** in step

(α1) the DMC catalyst and one or more H-functional starter compounds are initially introduced into a reactor and inert gas is passed in at a temperature of from 60 to 160°C, and a reduced pressure (absolute) of from 5 mbar to 500 mbar is simultaneously established in the reactor by removal of the inert gas ("stripping").

7.  Process according to claim 1, **characterized in that**

(α) a starting medium and a part amount of DMC catalyst are initially introduced into a reactor system and
(β) one or more H-functional starter compounds are metered in continuously together with alkylene oxide and further DMC catalyst and the reaction product is removed from the reactor system continuously after an average dwell time of from 15 to 23 hours.

wherein alkylene oxide addition products, a part amount of the H-functional starter compound and/or polyether polyol with an equivalent molecular weight of from 4,000 to 20,000 g/mol are employed as the starting medium.

8.  Process according to one of claims 3, 5 or 6, **characterized in that** in step (α2) from 2 to 20 wt.% (based on the sum of the one or more H-functional starter compounds employed in step (α1)) of one or more alkylene oxides are added and in step (β) the remaining part amount of one or more alkylene oxides is added.

9.  Process according to one of claims 2, 3 and 8, wherein the alkylene oxide metering rate in step (β) is between 4,500 g of alkylene oxide / (mol of hydroxyl groups x h) and 50 g of alkylene oxide / (mol of hydroxyl groups x h).

10. Process according to claim 9, wherein the alkylene oxide metering rate is lowered in step (β).

**11.** Process according to one of claims 1 to 10, **characterized in that** the polymerization is carried out at a temperature of 110 - 150°C.

**12.** Process according to one of claims 1 to 11 for the preparation of polyether polyols with equivalent molecular weights of from 9,000 to 20,000 g/mol.

**13.** Process according to one of claims 4, 5, 6, 8, 11 and 12, **characterized in that** in step ($\beta$) the metering of the H-functional starter compound is ended before the metering of the alkylene oxides extending over a period of from 15 to 23 h is ended.

**14.** Process according to claim 13, wherein after the end of the metering of the H-functional starter compound the metering rate of the alkylene oxides is changed, the alkylene oxide metering rate being between 4,500 g of alkylene oxide / (mol of hydroxyl groups x h) and 50 g of alkylene oxide / (mol of hydroxyl groups x h).

**15.** Process according to claim 13, wherein after the end of the metering of the H-functional starter compound the metering rate of the alkylene oxides is lowered.


**Revendications**

**1.** Procédé pour la production de polyétherpolyols ayant des masses moléculaires équivalentes de 8 000 à 20 000 g/mole, à partir d'un ou de plusieurs composés de départ à fonction H, d'un ou de plusieurs oxydes d'alkylène, en présence d'un catalyseur de type cyanure bimétallique (DMC), **caractérisé en ce qu'**on introduit dans le réacteur les oxydes d'alkylène par addition dosée en l'espace de 15 à 23 h et en considérant pour le calcul de la <u>masse moléculaire équivalente : masse moléculaire équivalente = 56 100/(indice de groupes OH [mg de KOH/g]).</u>

**2.** Procédé selon la revendication 1, **caractérisé en ce que**

($\alpha$) on dispose au préalable dans un réacteur le catalyseur DMC et un ou plusieurs composés de départ à fonction H et, à une température de 60 à 160 °C, on introduit un gaz inerte et en même temps par élimination du gaz inerte on ajuste dans le réacteur une pression (absolue) réduite de 5 mbars à 500 mbars (« strippage »),
($\beta$) ensuite on introduit dans le réacteur par addition dosée un ou plusieurs oxydes d'alkylène en un espace de temps de 15 à 23 h (« polymérisation »).

**3.** Procédé selon la revendication 1, **caractérisé en ce que**

($\alpha$)

($\alpha$1) on dispose au préalable dans un réacteur le catalyseur DMC et un ou plusieurs composés de départ à fonction H et, à une température de 60 à 160 °C, on introduit un gaz inerte et en même temps par élimination du gaz inerte on ajuste dans le réacteur une pression (absolue) réduite de 5 mbars à 500 mbars (« strippage »),
($\alpha$2) on ajoute au mélange provenant de l'étape ($\alpha$1) une quantité partielle d'un ou de plusieurs oxydes d'alkylène (« activation ») ;

($\beta$) ensuite on introduit dans le réacteur par addition dosée la quantité restante d'un ou de plusieurs oxydes d'alkylène en un espace de temps de 15 à 23 h (« polymérisation »).

**4.** Procédé selon la revendication 1, **caractérisé en ce que**

($\alpha$) on dispose au préalable dans un réacteur le catalyseur DMC et un milieu de départ,
($\beta$) ensuite on introduit dans le réacteur par addition dosée la quantité totale d'un ou de plusieurs oxydes d'alkylène en une durée de 15 à 23 h ainsi que le composé de départ à fonction H ou une quantité partielle du composé de départ à fonction H (« polymérisation »),

en utilisant comme milieu de départ des produits d'addition d'oxydes d'alkylène, une quantité partielle du composé de départ à fonction H et/ou un polyétherpolyol ayant une masse moléculaire équivalente de 4 000 à 20 000 g/mole.

**5.** Procédé selon la revendication 1, **caractérisé en ce que**

(α)

(α1) on dispose au préalable dans un réacteur le catalyseur DMC et un ou milieu de départ,
(α2) on ajoute au mélange provenant de l'étape (α1) une quantité partielle d'un ou de plusieurs oxydes d'alkylène (« activation ») ;

(β) ensuite on introduit dans le réacteur par addition dosée la quantité partielle restante d'un ou de plusieurs oxydes d'alkylène en un espace de temps de 15 à 23 h ainsi que le composé de départ à fonction H ou une quantité partielle du composé de départ à fonction H (« polymérisation »),

en utilisant comme milieu de départ des produits d'addition d'oxydes d'alkylène, une quantité partielle du composé de départ à fonction H et/ou un polyétherpolyol ayant une masse moléculaire équivalente de 4 000 à 20 000 g/mole.

**6.** Procédé selon la revendication 5, **caractérisé en ce que** dans l'étape

(α1) on dispose au préalable dans un réacteur le catalyseur DMC et un ou plusieurs composés de départ à fonction H et, à une température de 60 à 160 °C, on introduit un gaz inerte et en même temps par élimination du gaz inerte on ajuste dans le réacteur une pression (absolue) réduite de 5 mbars à 500 mbars (« strippage »),

**7.** Procédé selon la revendication 1, **caractérisé en ce que**

(α) on dispose au préalable dans un système réacteur un milieu de départ et une quantité partielle de catalyseur DMC et
(β) on introduit en continu par addition dosée un ou plusieurs composés de départ à fonction H conjointement avec un oxyde d'alkylène et une nouvelle quantité de catalyseur DMC et on prélève en continu le produit de réaction du système réacteur après un temps de séjour moyen de 15 à 23 heures,

en utilisant comme milieu de départ des produits d'addition d'oxydes d'alkylène, une quantité partielle du composé de départ à fonction H et/ou un polyétherpolyol ayant une masse moléculaire équivalente de 4 000 à 20 000 g/mole.

**8.** Procédé selon l'une quelconque des revendications 3, 5 ou 6, **caractérisé en ce que** dans l'étape (α2) on ajoute de 2 à 20 % en poids (par rapport à la somme desdits un ou plusieurs composés de départ à fonction H utilisés dans l'étape (α1)) d'un ou de plusieurs oxydes d'alkylène et dans l'étape (β) on ajoute la quantité partielle restante d'un ou de plusieurs oxydes d'alkylène.

**9.** Procédé selon l'une quelconque des revendications 2, 3 et 8, dans lequel la vitesse d'addition dosée des oxydes d'alkylène dans l'étape (β) est comprise entre 4 500 g d'oxyde d'alkylène / (mole de groupes hydroxy x h) et 50 g d'oxyde d'alkylène / (mole de groupes hydroxy x h).

**10.** Procédé selon la revendication 9, dans lequel on diminue dans l'étape (β) la vitesse d'addition dosée des oxydes d'alkylène.

**11.** Procédé selon l'une quelconque des revendications 1 à 10, **caractérisé en ce qu'**on effectue la polymérisation à une température de 110 - 150 °C.

**12.** Procédé selon l'une quelconque des revendications 1 à 11, pour la production de polyétherpolyols ayant des masses moléculaires équivalentes de 9 000 à 20 000 g/mole.

**13.** Procédé selon l'une quelconque des revendications 4, 5, 6, 8, 11 et 12, **caractérisé en ce que** dans l'étape (β) on met fin à l'addition dosée du composé de départ à fonction H avant que soit terminée l'addition dosée des oxydes d'alkylène s'étendant sur un espace de temps de 15 à 23 h.

**14.** Procédé selon la revendication 13, dans lequel après la fin de l'addition dosée du composé de départ à fonction H on modifie la vitesse d'addition dosée des oxydes d'alkylène, la vitesse d'addition dosée des oxydes d'alkylène étant comprise entre 4 500 g d'oxyde d'alkylène / (mole de groupes hydroxy x h) et 50 g d'oxyde d'alkylène / (mole de groupes hydroxy x h).

**15.** Procédé selon la revendication 13, dans lequel après la fin de l'addition dosée du composé de départ à fonction H on réduit la vitesse d'addition dosée des oxydes d'alkylène.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5470813 A
- EP 700949 A
- EP 743093 A
- EP 761708 A
- WO 9740086 A
- WO 9816310 A
- WO 0047649 A
- DE 4117679 A
- US 5096993 A
- WO 9104997 A
- EP 1316573 A
- EP 0425694 A
- EP 0732561 A
- EP 1525244 A
- US 3404109 A
- US 3829505 A
- US 3941849 A
- US 5158922 A
- JP 4145123 A

- WO 0139883 A
- WO 0180994 A
- US 4987271 A
- DE 3132258 A
- EP 406440 A
- US 5391722 A
- US 5099075 A
- US 4721818 A
- US 4877906 A
- EP 385619 A
- US 3538043 A
- US 4500704 A
- US 5032671 A
- US 6646100 A
- EP 222453 A
- WO 2008013731 A
- WO 9914258 A
- WO 9729146 A
- WO 9803571 A

**In der Beschreibung aufgeführte Nicht-Patentliteratur**

- Ullmann's Encyclopedia of Industrial Chemistry. 1992, vol. B4, 167ff
- Handbuch Apparate. Vulkan-Verlag Essen, 1990, 188-208

- **D. ZHU ; M. A. HAIDEKKER ; J.-S. LEE ; Y.-Y. WON ; J. C.-M. LEE.** *Macromolecules,* 2007, vol. 40, 7730-7732
- **D. ZHU ; M. A. HAIDEKKER ; J.-S. LEE ; Y.-Y. WON ; J. C.-M. LEE.** *Macromolecules,* 2007, vol. 40, 7730-7732